# DEMANDE DE BREVET EUROPEEN

(11) **EP 0 997 335 A1**
(43) Date de publication de la demande: **03.05.2000**
(21) Numéro de dépôt: 99402618.5
(22) Date de dépôt: 22.10.1999
(51) Int. Cl.: B60K 15/03, F17C 1/08

(54) **Réservoir à fluide sous pression pour véhicule automobile**

(30) Priorité: 27.10.1998 FR 9813416
(71) Demandeur: RENAULT, 92109 Boulogne-Billancourt (FR)
(72) Inventeur: Heurtaux, Fabien, 78500 Sartrouville (FR)

(57) **Abrégé**

Réservoir pour fluide sous pression destiné à contenir au moins un fluide sous pression, dans au moins un compartiment à paroi s'étendant longitudinalement et présentant des parois d'extrémité, comprenant un compartiment principal (2) dans lequel est prévue une cloison transversale intermédiaire (10) portée par sa paroi longitudinale et déterminant d'un côté une chambre auxiliaire (12) dans laquelle sont logés des accessoires d'exploitation du fluide, qui sont portés par ladite cloison transversale intermédiaire (10) et qui présentent des organes opérant au travers de cette cloison (10) et au travers de la paroi d'extrémité (7) de cette chambre auxiliaire (12).

## Description

La présente invention concerne le domaine des réservoirs à fluide sous pression, comportant une phase gazeuse et/ou une phase liquide.

Pour être opérationnel, un tel réservoir est associé à un ensemble d'accessoires comprenant, par exemple, une vanne de remplissage, une électrovanne de sécurité, une soupape de surpression, une jauge de remplissage, une vanne ou un limiteur de débit et des raccords d'entrée et de sortie de fluide.

La présente invention a pour but de proposer un réservoir dont la structure permet une intégration d'au moins certains desdits accessoires et, en même temps, leur protection contre la corrosion et les chocs.

Le réservoir destiné à contenir au moins un fluide sous pression, dans au moins un compartiment à paroi s'étendant longitudinalement et présentant des parois d'extrémité, comprend, selon l'invention, un compartiment principal dans lequel est prévue une cloison transversale intermédiaire portée par sa paroi longitudinale et déterminant d'un côté une chambre auxiliaire dans laquelle sont logés des accessoires d'exploitation du fluide, qui sont portés par ladite cloison transversale intermédiaire et qui présentent des organes opérant au travers de cette cloison et au travers de la paroi d'extrémité de cette chambre auxiliaire.

Ladite paroi longitudinale peut avantageusement être extrudée ou réalisée par un tube évasé.

Selon l'invention, ladite cloison transversale intermédiaire comprend une bride périphérique fixée contre la paroi dudit compartiment principal et un support fixé sur cette bride et portant ledits accessoires.

Selon l'invention, le réservoir peut avantageusement comprendre au moins deux compartiments dont au moins un compartiment secondaire s'étendant longitudinalement et séparé dudit compartiment principal par une cloison longitudinale.

Selon une variante de l'invention, ledit compartiment secondaire s'étend autour dudit compartiment principal.

Selon une autre variante de l'invention, le réservoir comprend au moins deux compartiments secondaires formés de part et d'autre dudit compartiment principal, ce compartiment principal constituant une entretoise.

Selon l'invention, ladite cloison transversale peut avantageusement déterminer, de l'autre côté, une chambre à fluide dans ledit compartiment principal.

Selon l'invention, la paroi d'extrémité du compartiment prinipal constitue de préférence un couvercle amovible et la paroi d'extrémité opposée constitue une partie de la paroi du réservoir.

Selon l'invention, le réservoir peut être du type matelas ou du type tubulaire.

La présente invention sera mieux comprise à l'étude de réservoirs à accessoires intégrés, décrits à titre d'exemples non limitatifs et illustrés par le dessins sur lequel :
- la figure 1 représente une coupe d'un réservoir matelas dont lequel sont intégrés des accessoires ;
- la figure 2 représente une vue en hauteur du réservoir torique de la figure 1 ;
- la figure 3 montre une autre structure d'un réservoir dans lequel peuvent être intégrés des accessoires ;
- et la figure 4 représente une variante du réservoir de la figure 3.

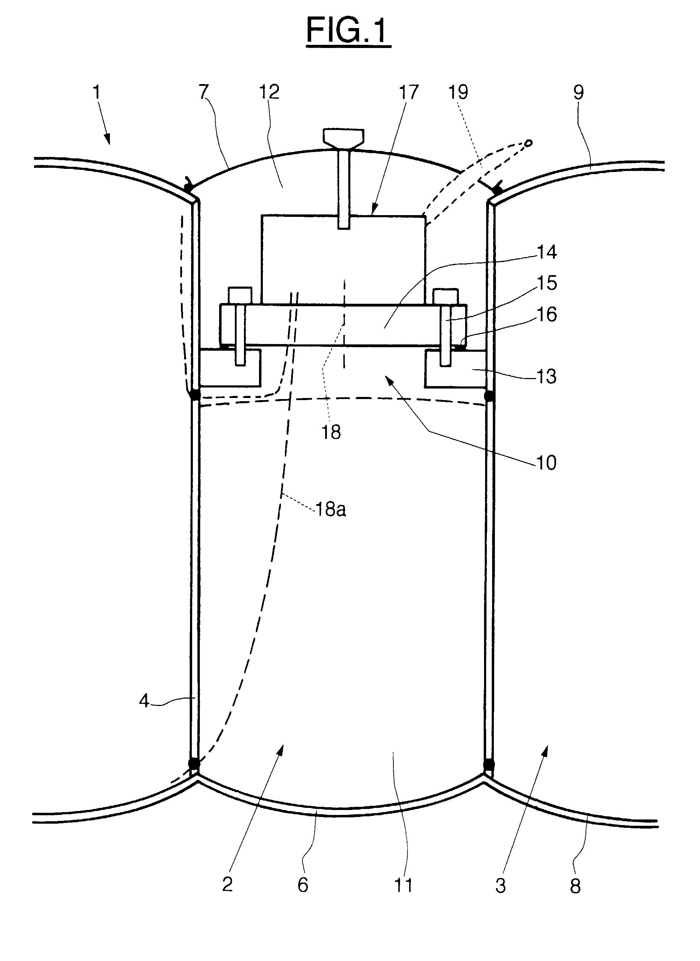

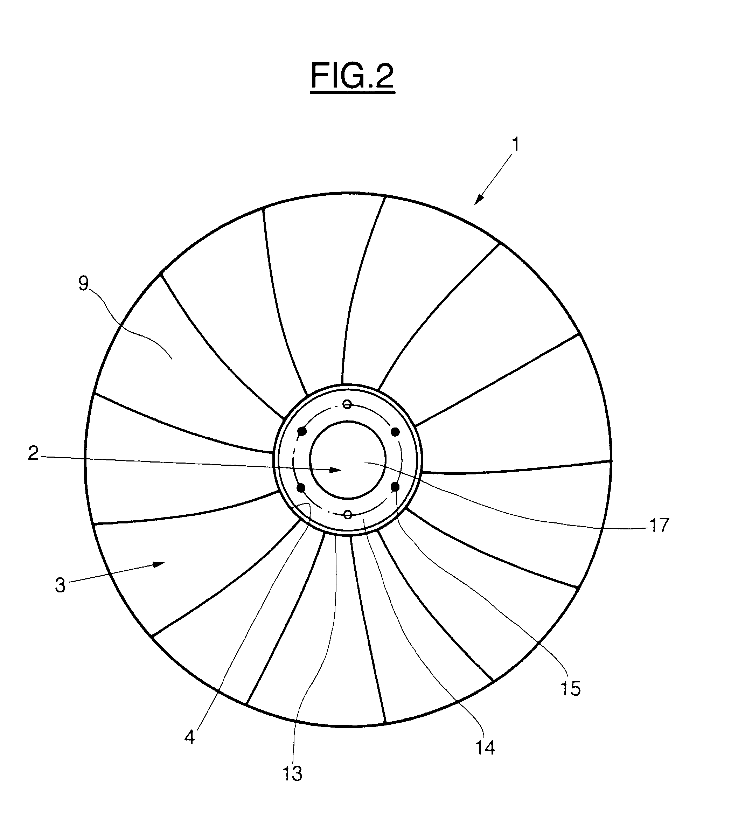

En se reportant aux figures 1 et 2, on voit qu'on a représenté un réservoir torique 1 qui comprend coaxialement un compartiment central 2 et un compartiment périphérique 3, à parois longitudinales cylindriques 4, dont la paroi 4 sépare le compartiment central 2 et le compartiment annulaire 3, le compartiment 2 présentant des parois d'extrémité 6 et 7 et le compartiment 3 présentant des parois d'extrémité 8 et 9.

Le compartiment 2, principal, comporte une paroi transversale intermédiaire 10 qui le divise en une chambre principale 11 située du côté de sa paroi d'extrémité 6 et une chambre auxiliaire 12 située du côté de sa paroi d'extrémité 7.

La paroi d'extrémité 7 du compartiment 12 est montée de façon amovible de manière à constituer un couvercle pour la chambre auxiliaire 12.

La paroi transversale 10 est constituée par une bride annulaire 13 dont la partie périphérique est fixée de façon étanche à la face intérieure de la paroi longitudinale 4, par exemple par collage ou par soudage, et une plate-forme 14 en forme de disque ou conique disposée dans la chambre auxiliaire 12 et dont la partie périphérique est fixée sur la bride 13 grâce à des vis longitudinales 15, un joint d'étanchéité 16 étant interposé entre la bride 13 et la plate-forme 14.

La plate-forme 14 porte, dans la chambre auxiliaire 12, un ensemble d'accessoires 17, non individuellement représenté sur le dessin, qui peuvent être constitués, par exemple d'une vanne de remplissage, d'une électrovanne de sécurité, d'une soupape de surpression, d'une jauge de remplissage, d'un limiteur de débit et des raccords d'entrée et de sortie de fluide.

Les organes de cet ensemble d'accessoires sont susceptibles d'opérer, c'est-à-dire d'être connectés électriquement pour être commandés ou d'être connectés pour effectuer les transferts de fluide dans un sens ou dans l'autre, d'une part par des moyens de connexion 18 s'étendant au travers de la plate-forme 14 et de l'espace intérieur de la bride 13 et d'autre part par des moyens de connexion 19 s'étendant au travers du couvercle 7.

Ainsi, la disposition décrite ci-dessus permet d'intégrer l'ensemble d'accessoires 17 dans le réservoir 1 de telle sorte qu'il est protégé contre la corrosion et les chocs, sans altérer sa résistance et en facilitant les connexions, la paroi transversale 10 pouvant d'ailleurs constituer un élément de renforcement.

De préférence, la paroi transversale intermédiaire 10 est disposée de telle sorte que la chambre auxiliaire 12 soit la plus petite possible et qu'en conséquence la chambre 11 soit la plus grande possible. Cette cloison 10 est réalisée par les pièces 13, 14, 15, 16 pour être démontable.

Dans un exemple de réalisation et d'utilisation, le compartiment périphérique 3 et la chambre 11 du compartiment central 2 peuvent être mis en communication par un ou plusieurs orifices non représentés sur le dessin, ménagés dans la paroi longitudinale 4 de telle sorte que le réservoir 1 puisse contenir un seul fluide, les moyens de connexion 18 débouchant par exemple directement dans la chambre 11.

Dans une autre variante de réalisation et d'utilisation, la paroi longitudinale 4 étant étanche, le réservoir 1 peut contenir un premier fluide dans le compartiment annulaire 3 et un second fluide dans la chambre centrale 11. Dans ce cas, les accessoires 17 présentent des moyens de connexion 18 débouchant au travers de la plate-forme 14 dans la chambre 11 et des moyens de connexion 18a s'étendant au-travers de la plate-forme 14, traversant la chambre 11 et s'étendant de façon étanche au travers de la paroi longitudinale 4 pour déboucher dans le compartiment 3.

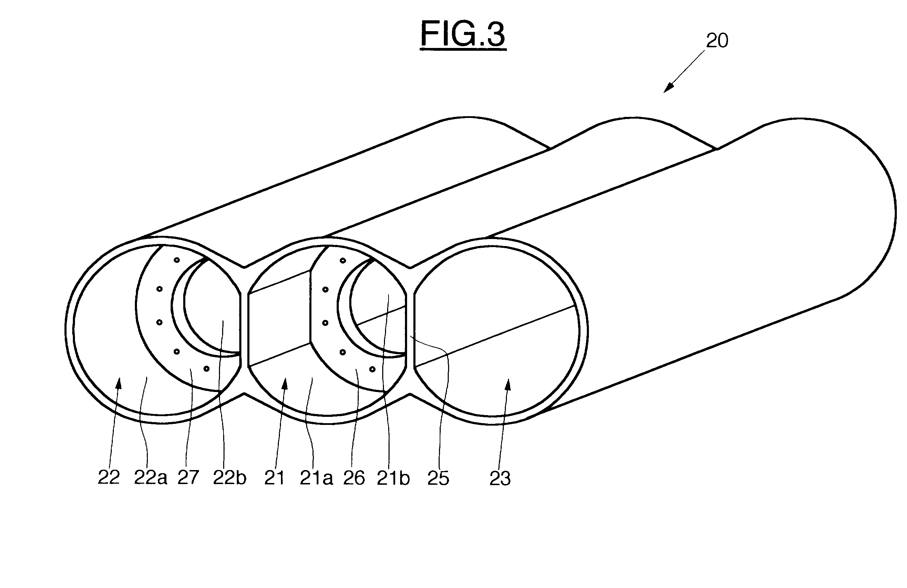

En se reportant à la figure 3, on voit qu'on a représenté un réservoir 20 à deux fluides, qui comprend un compartiment central 21 et deux compartiments secondaires 22 et 23 disposés latéralement et de part et d'autre du compartiment central 21, ce dernier constituant une entretoise et présentant des parois longitudinales 24 et 25 de séparation avec les compartiments latéraux 22 et 23.

Le compartiment central 21 et le compartiment latéral 22 peuvent être réalisés de la même manière que le compartiment 2 du réservoir 1 et ainsi comprendre des chambres auxiliaires 21a et 22a délimitées par des parois transversales comprenant des brides 26 et 27, et un couvercle, dans lesquelles peuvent être logés les différents accessoires d'exploitation des fluides contenus dans leurs chambres secondaires 21b et 22b situées de l'autre côté de ces parois transversales, le compartiment latéral 23 communiquant avec la chambre secondaire 21b du compartiment central 21 au travers de la cloison 25.

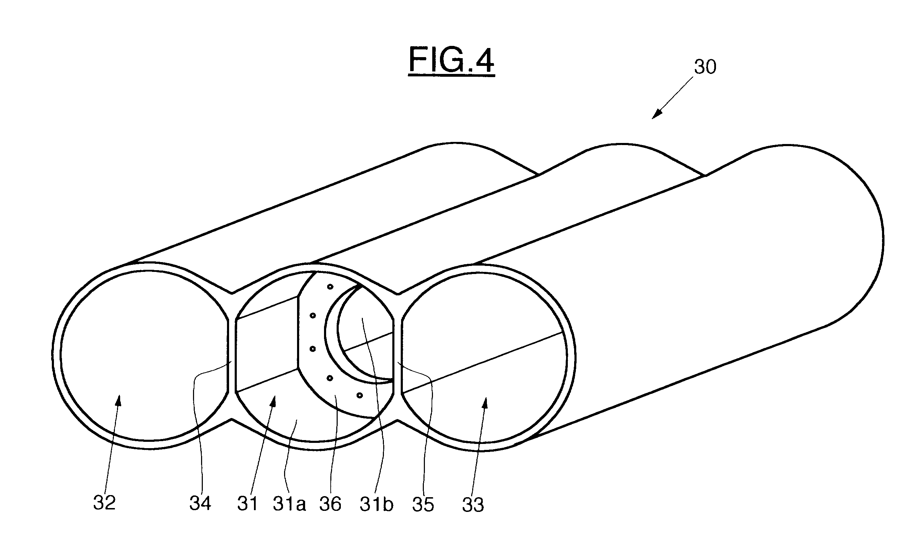

En se reportant à la figure 4, on voit que le réservoir 30 à fluide représenté se différence par le fait que seul son compartiment central 31 comprend une chambre auxiliaire 31a pour recevoir les accessoires et une chambre secondaire 31b séparées par une paroi transversale présentant une bride 36, ses compartiments latéraux 32 et 33 communiquant avec la chambre secondaire 31b du compartiment central 31 au travers de leurs cloisons longitudinales de séparation 34 et 35.

La présente invention ne se limite pas aux exemples ci-dessus décrits. Bien des variantes de réalisation sont possibles sans sortir du cadre défini par les revendications annexées.

## Revendications

1. Réservoir pour fluide sous pression destiné à contenir au moins un fluide sous pression, dans au moins un compartiment à paroi s'étendant longitudinalement et présentant des parois d'extrémité, caractérisé par le fait qu'il comprend un compartiment principal (2) dans lequel est prévue une cloison transversale intermédiaire (10) portée par sa paroi longitudinale et déterminant d'un côté une chambre auxiliaire (12) dans laquelle sont logés des accessoires d'exploitation du fluide, qui sont portés par ladite cloison transversale intermédiaire (10) et qui présentent des organes opérant au travers de cette cloison (10) et au travers de la paroi d'extrémité (7) de cette chambre auxiliaire (12).

2. Réservoir selon la revendication 1, caractérisé par le fait que ladite cloison transversale intermédiaire (10) comprend une bride périphérique fixée contre la paroi dudit compartiment principal (2) et une plate-forme amovible (14) fixée sur cette bride et portant ledits accessoires.

3. Réservoir selon l'une des revendications précédentes, caractérisé par le fait qu'il comprend au moins deux compartiments dont au moins un compartiment secondaire (3 ; 12) s'étendant longitudinalement et séparé dudit compartiment principal par une cloison longitudinale (4 ; 24).

4. Réservoir selon 4, caractérisé par le fait que ledit compartiment secondaire (3) s'étend autour dudit compartiment principal (2).

5. Réservoir selon la revendications 3, caractérisé par le fait qu'il comprend au moins deux compartiments secondaires (22, 23) formés de part et d'autre dudit compartiment principal (21), ce compartiment principal constituant une entretoise permettant l'utilisation de deux fluides sous pression.

6. Réservoir selon l'une quelconque des revendications principales, caractérisé par le fait que ladite cloison transversale (10) détermine, de l'autre côté, une chambre à fluide (11) dans ledit compartiment principal (2).

7. Réservoir selon l'une quelconque des revendications principales, caractérisé par le fait que la paroi d'extrémité de ladite chambre auxiliaire (12) constitue un couvercle amovible (7) et la paroi d'extrémité opposée (6) une partie de la paroi du réservoir.
